# DEMANDE DE BREVET EUROPEEN

(11) **EP 4 607 725 A1**
(43) Date de publication de la demande: **27.08.2025**
(21) Numéro de dépôt: 25160007.8
(22) Date de dépôt: 25.02.2025
(51) Int. Cl.: H02G 3/12, H02G 3/14

(54) **ENSEMBLE FORMÉ D'UNE PLAQUE SUPPORT PRÉVUE POUR SUPPORTER UN APPAREILLAGE ÉLECTRIQUE, D'UNE PLAQUE D HABILLAGE ET D'UN ORGANE FONCTIONNEL ADDITIONNEL**

(30) Priorité: 26.02.2024 FR 2401846
(71) Demandeur: Legrand France, 87000 Limoges (FR); Legrand SNC, 87000 Limoges (FR)
(72) Inventeur: GUIBERT, Jean-Sébastien, 87000 Limoges (FR)
(74) Mandataire: Santarelli

(57) **Abrégé**

L'invention concerne un ensemble formé d'une plaque support (2) et d'une plaque d'habillage (6) et d'un organe fonctionnel (8) additionnel configurés pour être assujettis mécaniquement sur la plaque support qui présente une face arrière (11), une face avant (12), une pluralité de zones d'encliquetage ménagées sur la face avant, et qui est fixée par sa face arrière sur un support quelconque et pour supporter sur sa face avant un appareillage électrique (4), la plaque d'habillage présente une fenêtre (42) et une pluralité de premiers organes de guidage et d'encliquetage assujettis mécaniquement dans certaines des zones d'encliquetage respectives de la plaque support, et l'organe fonctionnel additionnel est disposé en regard de la fenêtre (42) de la plaque d'habillage et présente une pluralité de deuxièmes organes de guidage et d'encliquetage distincts des premiers organes et assujettis mécaniquement dans certaines autres des zones d'encliquetage respectives de la plaque support.

## Description

### DOMAINE TECHNIQUE DE L'INVENTION

L'invention concerne un ensemble formé d'une plaque support configurée pour être fixée sur un support quelconque, notamment une boîte à encastrer dans ou à rapporter en saillie sur une paroi, et pour supporter un appareillage électrique, par exemple du type interrupteur ou prise de courant, d'une plaque d'habillage configurée pour être assujettie sur la plaque support et d'un organe fonctionnel additionnel, par exemple du type porte-étiquette ou passerelle de communication, configuré pour être assujetti sur la plaque support.

### ÉTAT DE LA TECHNIQUE

On connait du brevet européen EP 3 104 478 un dispositif électrique destiné à être installé dans ou sur un mur, qui comprend un cadre de montage sur lequel sont assemblés un porte-étiquette, un appareillage électrique et une plaque d'habillage.

La plaque d'habillage est pourvue d'une fenêtre en regard de laquelle est disposé le porte-étiquette pour être visible depuis l'extérieur du dispositif électrique.

Le porte-étiquette a une partie médiane allongée et des extrémités de part et d'autre de la partie médiane allongée, le cadre de montage est pourvu de saillies vers l'avant et de découpes formant des ouvertures adjacentes aux saillies et dans lesquelles sont reçues les extrémités opposées du porte-étiquette, lesquelles extrémités s'étendent ainsi derrière les saillies.

En d'autres termes, dans le dispositif du brevet européen EP 3 104 478, comme les saillies sont décalées vers l'avant, les extrémités opposées du porte-étiquette ne dépassent pas d'une face arrière du cadre de montage, lequel peut donc être monté par sa face arrière sans être gêné par le porte-étiquette.

### EXPOSÉ DE L'INVENTION

La présente invention vise à fournir un ensemble d'un genre similaire, qui soit particulièrement simple, commode et économique.

À cet effet, l'invention a pour objet un ensemble formé d'une plaque support et d'au moins une plaque d'habillage et d'au moins un organe fonctionnel additionnel configurés pour être assujettis mécaniquement sur la plaque support, laquelle plaque support présente une face arrière, une face avant opposée à la face arrière, une pluralité de zones d'encliquetage ménagées sur la face avant et la plaque support est configurée pour être fixée par sa face arrière sur un support quelconque et pour supporter sur sa face avant un appareillage électrique, l'au moins une plaque d'habillage présente une fenêtre et une pluralité de premiers organes de guidage et d'encliquetage configurés pour être assujettis mécaniquement dans certaines des zones d'encliquetage respectives de la plaque support, et l'au moins un organe fonctionnel additionnel est configuré pour être disposé en regard de la fenêtre de l'au moins une plaque d'habillage et présente une pluralité de deuxièmes organes de guidage et d'encliquetage distincts des premiers organes de guidage et d'encliquetage et configurés pour être assujettis mécaniquement dans certaines autres des zones d'encliquetage respectives de la plaque support.

L'ensemble selon l'invention permet l'assujettissement à la fois d'au moins une plaque d'habillage et d'au moins un organe fonctionnel additionnel sur n'importe quelles zones d'encliquetage parmi la pluralité de zones d'encliquetage de la plaque support.

En d'autres termes, la plaque support est pourvue de zones d'encliquetage identiques qui peuvent accueillir aussi bien une plaque d'habillage qu'un organe fonctionnel additionnel.

Grâce à l'ensemble selon l'invention, il est donc parfaitement possible de monter au moins une plaque d'habillage et au moins un organe fonctionnel additionnel tels que décrits ci-dessus sur une plaque support dite conventionnelle.

En effet, les plaques support conventionnelles peuvent être rectangulaires et peuvent comporter une ou plusieurs zones d'encliquetage sur chaque côté de la plaque support, alors qu'il est possible de monter une plaque d'habillage en utilisant les zones d'encliquetage présentes sur seulement deux côtés.

Grâce à l'ensemble selon l'invention, un organe fonctionnel additionnel peut ainsi être monté sur la plaque support en utilisant les zones d'encliquetage non utilisées de la plaque support, notamment sur un autre des côtés de la plaque support.

Des caractéristiques préférées, simples, commodes et économiques de l'ensemble selon l'invention sont présentées ci-après.

Chaque zone d'encliquetage de la plaque support peut être pourvue d'au moins une ouverture, d'au moins un évidement de guidage et d'au moins un ergot d'encliquetage disposé entre l'ouverture et l'évidement de guidage.

L'au moins une ouverture, l'au moins un évidement de guidage et l'au moins un ergot d'encliquetage sont accessibles depuis la face avant de la plaque support.

Chaque premier organe de guidage et d'encliquetage de l'au moins une plaque d'habillage peut être configuré pour être introduit dans l'au moins une ouverture et pour s'encliqueter avec l'au moins un ergot d'encliquetage d'une des zones d'encliquetage de la plaque support.

Au moins un premier organe de guidage et d'encliquetage peut être pourvu d'une patte de montage s'étendant en saillie et, sur un premier côté de la patte de montage, de rainures d'encliquetage configurées pour coopérer avec l'ergot d'encliquetage d'une des zones d'encliquetage de la plaque support et, sur un deuxième côté de la patte de montage opposé au premier côté, d'au moins une nervure de renfort.

Dans une configuration assemblée, les rainures d'encliquetage de la patte de montage peuvent coopérer avec l'ergot d'encliquetage, et la patte de montage est déformée élastiquement et tend à solliciter l'ergot d'encliquetage.

Par exemple, la patte de montage peut être mobile entre une première position stable et une deuxième position dans laquelle la patte de montage est sollicitée suivant une première direction allant du premier côté vers le deuxième côté par rapport à la première direction stable, lorsque les rainures d'encliquetage de la patte de montage coopèrent avec l'ergot d'encliquetage. En d'autres termes, la patte de montage est déformée élastiquement et tend à solliciter l'ergot d'encliquetage suivant une deuxième direction opposée à la première direction.

Chaque deuxième organe de guidage et d'encliquetage de l'au moins un organe fonctionnel additionnel peut être pourvu d'une patte de guidage configurée pour être introduite dans l'évidement de guidage et d'un ergot complémentaire configuré pour être introduit dans l'au moins une ouverture et pour s'encliqueter avec l'au moins un ergot d'encliquetage.

La patte de guidage peut s'étendre en saillie sur une première longueur déterminée et présenter une forme globalement tronconique se rétrécissant vers une extrémité libre de la patte de guidage.

L'ergot complémentaire peut s'étendre en saillie sur une deuxième longueur déterminée et en regard de la patte de guidage et comporter à une extrémité libre une dent dirigée vers la patte de guidage.

Chaque deuxième organe de guidage et d'encliquetage peut être pourvu d'un orifice ménagé à proximité immédiate de l'ergot complémentaire et configuré pour permettre le passage d'un outil pour désassujettir mécaniquement l'organe fonctionnel additionnel de la plaque support.

Chaque deuxième organe de guidage et d'encliquetage peut être pourvu en outre d'un renfoncement ménagé à proximité immédiate de l'ergot complémentaire et à l'opposé de la patte de guidage.

La patte de guidage peut s'étendre en saillie sur une première longueur déterminée et l'ergot complémentaire peut s'étendre en saillie sur une deuxième longueur déterminée inférieure à la première longueur déterminée.

L'au moins un organe fonctionnel additionnel peut être formé par au moins l'un parmi un porte-étiquette, un module de communication et une source lumineuse.

L'au moins une plaque d'habillage peut être configurée pour être assujettie mécaniquement sur la plaque support par la coopération de deux ou plus de premiers organes de guidage et d'encliquetage avec certaines des zones d'encliquetage, et l'au moins un organe fonctionnel additionnel peut être configuré pour être assujetti mécaniquement sur la plaque support par la coopération de deux deuxièmes organes de guidage et d'encliquetage avec certaines autres des zones d'encliquetage.

La plaque support a la forme d'un cadre présentant plusieurs branches pourvues chacune d'une ou plusieurs zones d'encliquetage, et l'au moins un organe fonctionnel additionnel peut être configurée pour être assujetti mécaniquement sur la plaque support par la coopération de deux deuxièmes organes de guidage et d'encliquetage avec certaines autres des zones d'encliquetage disposées soit sur une même branche du cadre, soit sur des branches distinctes du cadre.

L'ensemble peut comporter au moins un appareillage électrique supporté par la plaque support.

L'appareillage électrique peut être formé par une prise électrique, un interrupteur électrique à variateur ou non, ou tout autre appareillage pouvant être combiné à un organe fonctionnel additionnel tel que décrit ci-dessus.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 représente schématiquement en perspective un ensemble formé d'un appareillage électrique, ici du type prise électrique, et d'une plaque d'habillage disposée au moins partiellement autour de l'appareillage électrique.
La figure 2 est une vue en perspective éclatée de l'ensemble illustré sur la figure 1, montrant en outre une plaque support sur laquelle sont assujettis mécaniquement l'appareillage électrique, la plaque d'habillage ainsi qu'un organe fonctionnel additionnel ici formé par un porte-étiquette.
La figure 3 est une vue en perspective isolée de la plaque support.
La figure 4 est une vue de face de la plaque support illustrée sur la figure 3.
La figure 5 est une vue en coupe repérée V-V sur la figure 4.
La figure 6 est une vue de dos et en perspective isolée de la plaque d'habillage.
La figure 7 est une vue de face montrant isolément le porte-étiquette illustré sur la figure 2.
La figure 8 est une vue de dos et en perspective du porte-étiquette.
La figure 9 est une vue de détail de la figure 8.
La figure 10 est une vue en coupe repérée X-X sur la figure 7.
La figure 11 est une vue en coupe partielle montrant en particulier la coopération entre la plaque support et le porte-étiquette.

### DESCRIPTION DÉTAILLÉE DE L'INVENTION

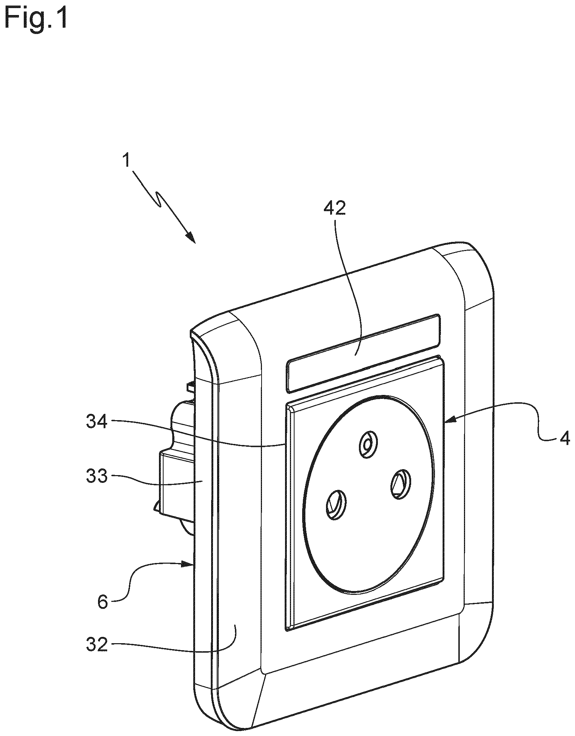

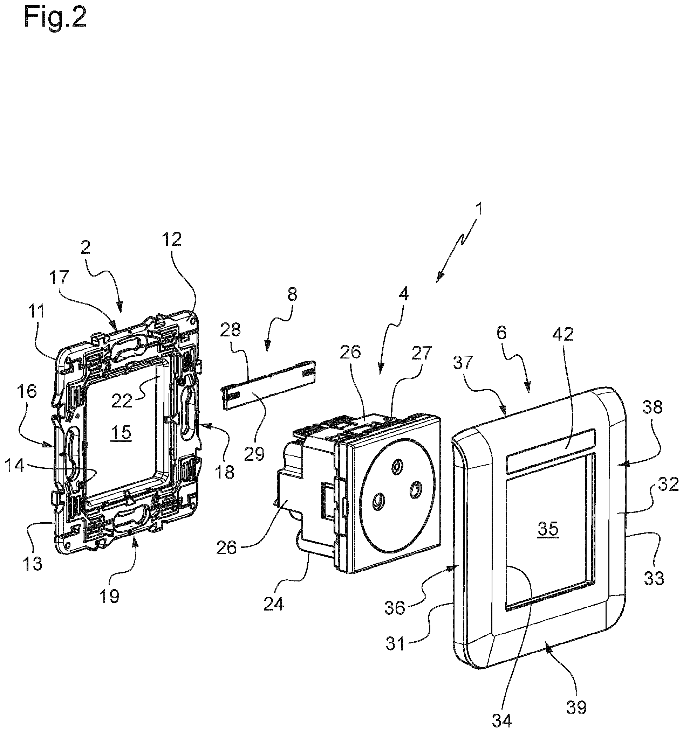

Les figures 1 et 2 représentent schématiquement un ensemble 1 formé d'une plaque support 2, ainsi que d'une plaque d'habillage 6, d'un organe fonctionnel additionnel ici formé par un porte-étiquette 8 et d'un appareillage électrique 4 qui sont configurés pour être assujettis mécaniquement sur la plaque support 2.

Un tel ensemble 1 est configuré pour être fixé, par l'intermédiaire de la plaque support 2, sur un support quelconque, notamment une boîte (non représentée) par exemple à encastrer dans ou à rapporter en saillie sur une paroi.

Dans l'exemple illustré, l'appareillage électrique 4 est une prise de courant qui est supportée par la plaque support 2.

Le porte-étiquette 8 et la plaque d'habillage 6 sont configurés pour être assujettis sur la plaque support 2 avec le porte-étiquette 8 qui est interposé entre la plaque support 2 et la plaque d'habillage 6.

La plaque d'habillage 6 est configurée pour recouvrir au moins partiellement la plaque support 2 tout en laissant l'appareillage électrique 4 accessible et le porte-étiquette 8 visible depuis l'extérieur de l'ensemble 1.

La plaque support 2 présente ici une forme de cadre sensiblement plat et globalement rectangulaire, défini par un premier bord périphérique extérieur 13 et un premier bord périphérique intérieur 14 qui délimite une première ouverture d'accueil 15 dans laquelle l'appareillage électrique 4 peut être logé.

La plaque support 2 présente une face arrière 11 et une face avant 12 opposée à la face arrière 11, face avant 12 du côté de laquelle est introduit l'appareillage électrique 4 et sont montés le porte-étiquette 8 et la plaque d'habillage 6.

La première ouverture d'accueil 15 de la plaque support 2 est pourvue, sur son premier bord périphérique intérieur 14, d'organes de montage, ici des organes d'encliquetage, qui comprennent par exemple une nervure d'accrochage 22 formant un bord tombant à partir de la face avant 12 de la plaque support 2.

L'appareillage électrique 4 comprend un socle 24 comprenant des parois latérales 26. Le socle 24 est pourvu, sur ses parois latérales 26, de dents d'encliquetage 27 en saillie configurées pour s'accrocher sur une nervure d'accrochage 22 respective de la plaque support 2.

Le porte-étiquette 8 présente une face de montage 28 et une face visible 29 opposée à la face de montage 28. En particulier, le porte-étiquette 8 est configuré pour être assujetti par sa face de montage 28 sur la face avant 12 de la plaque support 2.

La plaque d'habillage 6 présente une face masquée 31 et une face frontale 32 opposée à la face masquée 31. En particulier, la plaque d'habillage 6 est configurée pour être fixée par sa face masquée 31 sur la face avant 12 de la plaque support 2.

La plaque d'habillage 6 permet de masquer la plaque support 2 et sert notamment à apporter une fonction esthétique à l'ensemble 1.

La plaque d'habillage 6 présente une forme de cadre sensiblement plat défini par un deuxième bord périphérique extérieur 33 et un deuxième bord périphérique intérieur 34 qui délimite une deuxième ouverture d'accueil 35 de l'appareillage électrique 4.

Dans l'exemple illustré, la plaque support 2, l'appareillage électrique 4 et la plaque d'habillage 6 ont ici une forme globalement carrée.

En particulier, la plaque support 2, respectivement la plaque d'habillage 6, comportent quatre premières branches 16, 17, 18, 19, respectivement quatre deuxièmes branches 36, 37, 38, 39, formant les cadres et délimitant la première ouverture d'accueil 15, respectivement la deuxième ouverture d'accueil 35, qui ont ici aussi une forme globalement carrée.

La deuxième ouverture d'accueil 35 est dimensionnée de sorte que l'appareillage électrique 4 remplit la deuxième ouverture d'accueil 35.

La plaque d'habillage 6 comprend une fenêtre 42 ménagée de manière à venir en regard du porte-étiquette 8 lorsque la plaque d'habillage 6 est assujettie mécaniquement à la plaque support 2.

La face visible 29 du porte-étiquette 8 est alors visible au travers de la fenêtre 42 depuis l'extérieur de l'ensemble 1 lorsque la plaque d'habillage 6 est fixée à la plaque support 2.

La fenêtre 42 est ici ménagée sur l'une des deuxièmes branches 36, 37, 38, 39 de la plaque d'habillage 6 et présente une forme correspondant globalement à celle de la face visible 29 du porte-étiquette 8.

La plaque d'habillage 6 peut en outre être pourvue d'une verrine translucide (non représentée) fermant la fenêtre 42.

En particulier, la verrine peut être disposée de manière à affleurer la face frontale 32 de la plaque d'habillage 6.

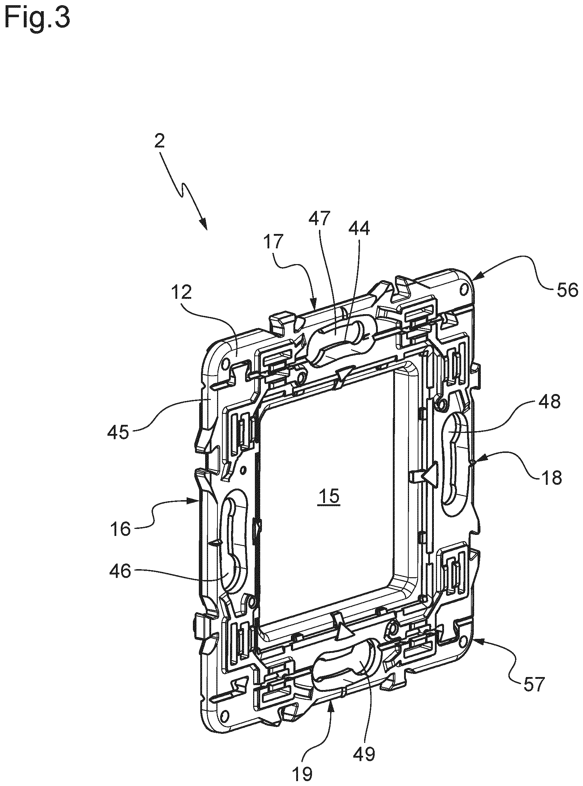

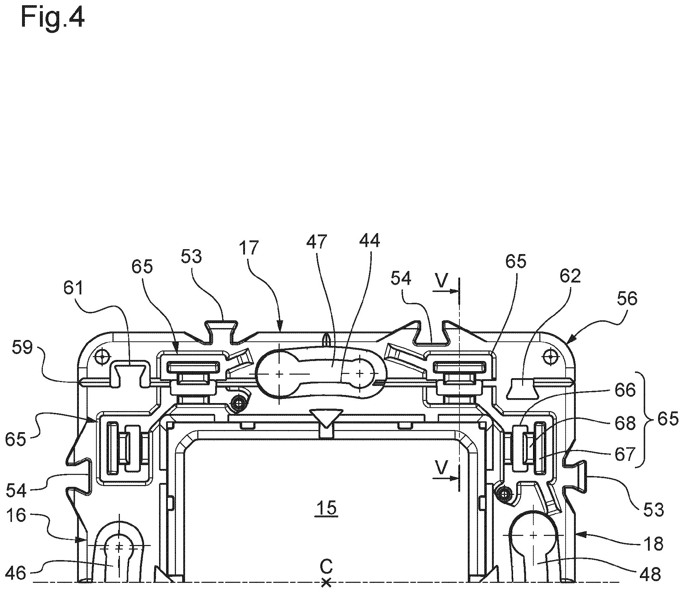

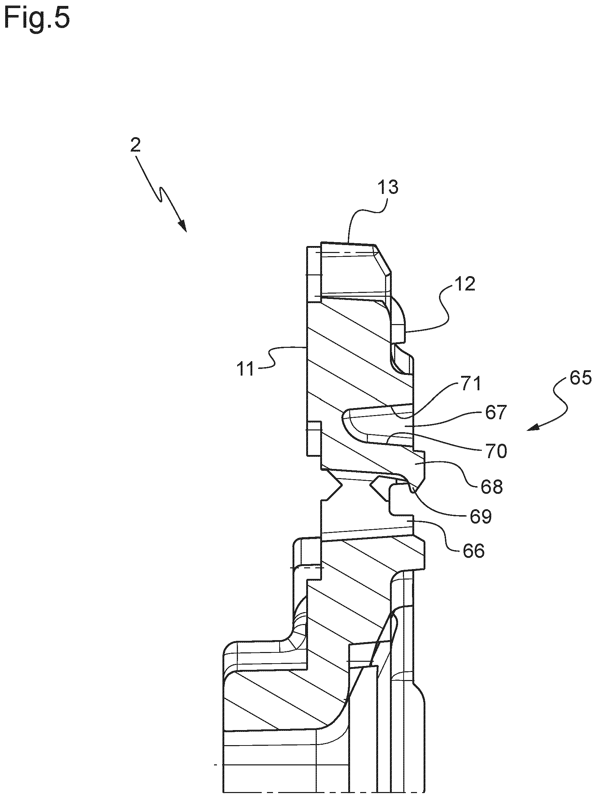

On va maintenant décrire plus en détail, en référence aux figures 3 à 5, la plaque support 2.

La plaque support 2 comprend ici une structure 44 en matière métallique et une peau 45 en matière synthétique isolante surmoulant la structure 44 métallique.

La peau 45 en matière synthétique isolante enveloppe la majeure partie de la structure 44 métallique.

La matière isolante formant la peau 45 est par exemple une matière plastique telle qu'un polymère chargé en fibres de verre ou un ABS (Acrylonitrile Butadiène Styrène).

Chacune des premières branches 16, 17, 18, 19 de la plaque support 2 est pourvue, en son centre, d'un orifice de fixation 46, 47, 48, 49.

Ces orifices de fixation 46, 47, 48, 49 présentent une forme de trou de serrure, qui s'étend globalement circulairement, en étant centré sur un centre C de la première ouverture d'accueil 15.

Chaque orifice de fixation 46, 47, 48, 49 est configuré pour permettre le passage d'un corps fileté d'une vis de fixation destinée à être vissée dans le support quelconque, tel que la boîte à encastrer dans ou à rapporter en saillie sur la paroi.

Autour de chaque orifice de fixation 46, 47, 48, 49, la structure 44 métallique est apparente et la peau 45 forme une surépaisseur.

La plaque support 2 comprend aussi, sur chacun des quatre côtés de son premier bord périphérique extérieur 17, des organes d'assemblage 53, 54 à une autre plaque support du même type.

En particulier, les organes d'assemblage 53, 54 prévus sur chaque côté comprennent, en saillie de celui-ci, un élément mâle 53, et, en creux, un élément femelle 54 de contour complémentaire, situé à distance de l'élément mâle 53, en correspondance avec celui-ci.

Dans l'exemple illustré, l'élément mâle 53 est un ergot et l'élément femelle 54 est une encoche.

La plaque support 2 est telle que l'association de plaques support avec les organes d'assemblage 53, 54 forme un entraxe déterminé, par exemple de 71 millimètres, c'est-à-dire que l'écartement entre les centres C des premières ouvertures d'accueil 15 des plaques support est de l'ordre de cet entraxe déterminé, soit par exemple 71 millimètres.

La plaque support 2 comporte, sur deux premières branches 17, 19 parallèles opposées, deux portions détachables 56, 57 qui s'étendent chacune sur toute la longueur de la première branche correspondante de la plaque support 2.

Chaque portion détachable 56, 57 est reliée d'un seul tenant à la première branche correspondante de la plaque support 2 par une ligne de cassure 59 de moindre résistance.

En outre, chaque première branche 13, 15 correspondante comporte, d'une part, en saillie de ladite ligne de cassure 59, un ergot 61 que ladite portion détachable 56, 57 contourne par une encoche, et, d'autre part, à distance de cet ergot 61 et en correspondance avec celui-ci, une encoche 62 de contour complémentaire.

En cassant une des lignes de cassure 59 pour détacher une portion détachable 56, 57 afin de dégager l'ergot 61 et l'encoche 62 correspondante et d'associer la plaque support 2 à une autre plaque support du même type dont la portion détachable a également été détachée par cassure de la ligne de cassure correspondante, il est possible d'associer ces plaque supports avec un entraxe différent, par exemple de 57 millimètres.

La plaque support 2 est pourvue en outre, sur sa face avant 12, d'une pluralité de zones d'encliquetage 65.

Dans l'exemple représenté, les zones d'encliquetage 65 sont réparties sur les quatre premières branches 16, 17, 18, 19 de la plaque support 2.

En particulier, chaque première branche 16, 17, 18, 19 est ici pourvue de deux zones d'encliquetage 65 disposées de part et d'autre de l'orifice de fixation 46, 47, 48, 49 correspondant.

Chaque zone d'encliquetage 65 est pourvue d'une ouverture 66, d'un évidement de guidage 67 et d'un ergot d'encliquetage 68 disposé entre l'ouverture 66 et l'évidement de guidage 67.

Chaque ouverture 66, chaque évidement de guidage 67 et chaque ergot d'encliquetage 68 a une forme allongée suivant une direction longitudinale de la première branche sur laquelle l'ouverture 66, l'évidement de guidage 67 et l'ergot d'encliquetage 68 sont respectivement ménagés.

En particulier, les ouvertures 66, les évidements de guidage 67 et les ergots d'encliquetage 68 ménagés sur deux premières branches opposées parallèles s'étendent sensiblement parallèlement entre eux/elles et sensiblement perpendiculairement aux ouvertures 66, aux évidements de guidage 67 et aux ergots d'encliquetage 68 des autres premières branches.

L'ergot d'encliquetage 68 comporte une première dent 69 faisant saillie dans l'ouverture 66.

L'évidement de guidage 67 est défini notamment par une paroi inférieure 70, à proximité immédiate de l'ergot d'encliquetage 68 et par une paroi supérieure 71 opposée à la paroi inférieure 70, et la première dent 69 présente une extrémité libre qui se trouve à une première distance déterminée de la paroi inférieure 71 de l'évidement de guidage 67 suivant une direction générale d'extension de la plaque support 2.

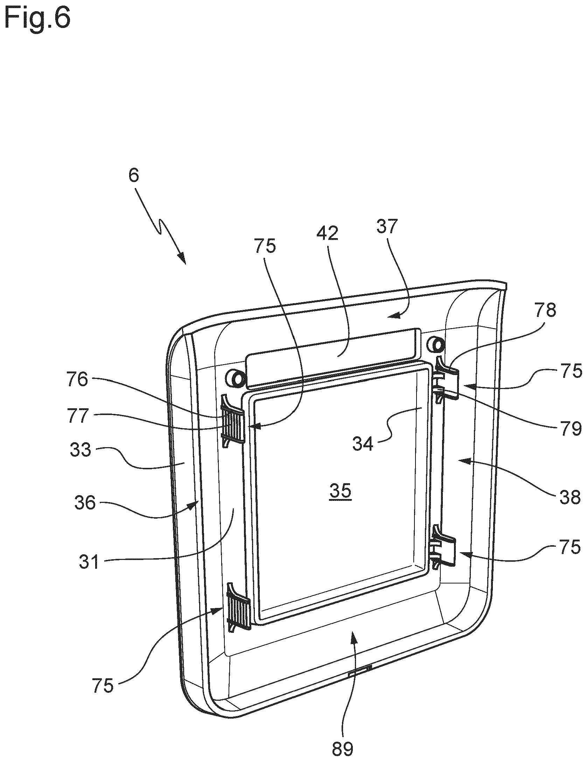

On va maintenant décrire plus en détail, en référence à la figure 6, la plaque d'habillage 6.

La plaque d'habillage 6 est pourvue, sur sa face masquée 31, d'une pluralité de premiers organes de guidage et d'encliquetage 75 configurés pour être assujettis mécaniquement dans certaines des zones d'encliquetage 65 respectives de la plaque support 2.

En d'autres termes, lorsque la plaque d'habillage 6 est assujettie mécaniquement sur la plaque support 2, certaines zones d'encliquetage 65 ne sont pas assujetties avec les premiers organes de guidage et d'encliquetage 75.

Dans l'exemple illustré, la plaque d'habillage 6 est pourvue de quatre premiers organes de guidage et d'encliquetage 75 qui sont répartis sur deux deuxièmes branches 36, 38 opposées et parallèles de la plaque d'habillage 6 et qui sont configurés pour coopérer avec des zones d'encliquetages 65 disposées sur deux premières branches 16, 18 opposées et parallèles de la plaque support 2.

En d'autres termes, lorsque la plaque d'habillage 6 est assujettie mécaniquement sur la plaque support 2, les zones d'encliquetage 65 disposées sur les deux autres premières branches 17, 19 opposées parallèles de la plaque support 2 ne coopèrent pas avec les premiers organes de guidage et d'encliquetage 75.

En particulier, chaque premier organe de guidage et d'encliquetage 75 est configuré pour être introduit dans l'ouverture 66 et pour s'encliqueter avec l'ergot d'encliquetage 68 d'une des zones d'encliquetage 65 de la plaque support 2.

Chaque premier organe de guidage et d'encliquetage 75 est ici pourvu d'une patte de montage 75 s'étendant en saillie de la face masquée 31 de la plaque d'habillage 6 et, sur un premier côté 76 de la patte de montage, de rainures d'encliquetage 77 et, sur un deuxième côté 78 de la patte de montage 75 opposé au premier côté 76, de nervures de renfort 79 s'étendant entre le deuxième côté 78 de la patte de montage 75 et la face masquée 31 de la plaque d'habillage 6.

Dans l'exemple illustré, les pattes de montage 75 sont agencées par paire(s), avec les pattes de montage 75 de chaque paire qui ont leur deuxième côté 78 à distance et en regard et l'un de l'autre.

Ici, les pattes de montage 75 de chaque paire sont disposées de part et d'autre de la deuxième ouverture d'accueil 35, c'est-à-dire sur des deuxièmes branches 36, 38 opposées et parallèles.

Chaque patte de montage 75 est mobile entre une première position stable et une deuxième position dans laquelle la patte de montage 75 est déplacée suivant une première direction allant de son premier côté 76 vers son deuxième côté 78 par rapport à la première position stable et déformée élastiquement.

En d'autres termes, les pattes de montage 75 de chaque paire sont mobiles entre une première position stable et une deuxième position dans laquelle elles sont rapprochées l'une de l'autre par rapport à la première position stable et déformées élastiquement.

Dans une configuration assemblée (non représentée) où la plaque d'habillage 6 est assujettie mécaniquement sur la plaque support 2, chaque patte de montage 75 est introduite dans l'ouverture 66, avec les rainures d'encliquetage 77 qui coopèrent avec l'ergot d'encliquetage 68, où chaque patte de montage 75 est dans sa deuxième position et déformée élastiquement.

En coopérant avec les rainures d'encliquetage 77, l'ergot d'encliquetage 68 fait passer la patte de montage 75 de sa première position stable à sa deuxième position.

Dans sa deuxième position, la patte de montage 75 qui est déformée élastiquement tend à solliciter l'ergot d'encliquetage 68 suivant une deuxième direction opposée à la première direction, de sorte à maintenir les rainures d'encliquetage 77 en appui contre l'ergot d'encliquetage 68.

Les nervures de renfort 79 sont par exemple configurées pour limiter la déformation élastique de chaque patte de montage 75, et donc son déplacement dans la première direction.

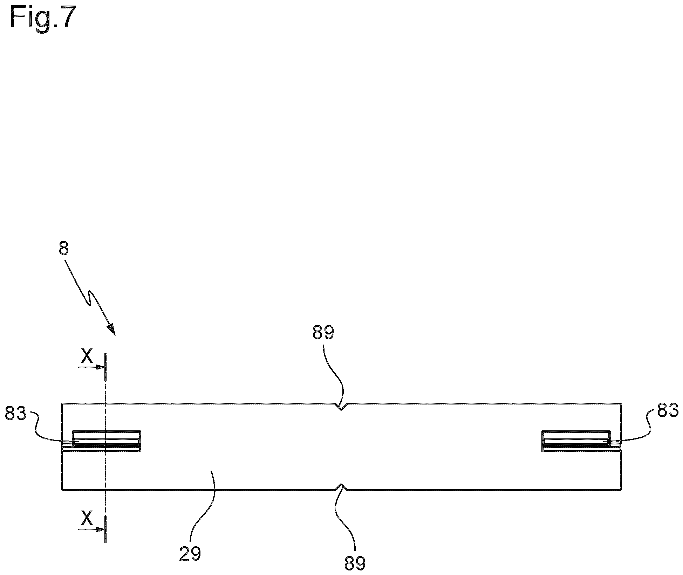

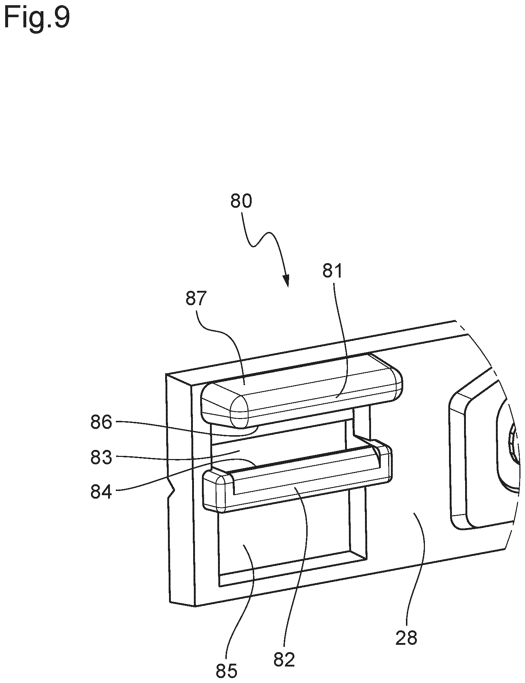

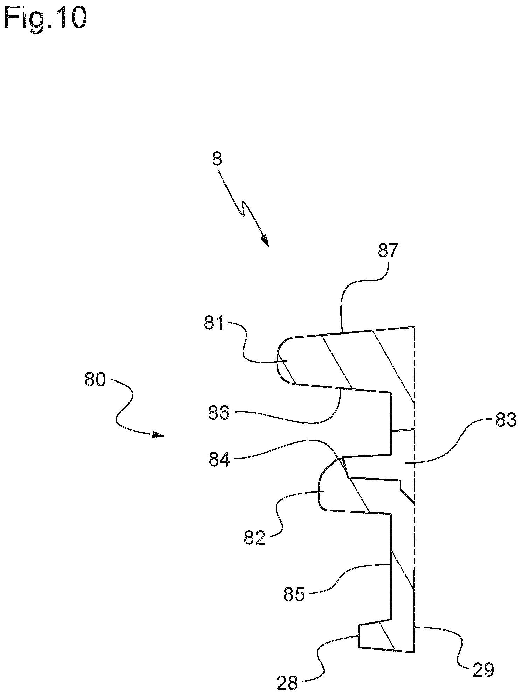

On va maintenant décrire plus en détail, en référence aux figures 7 à 10, le porte-étiquette 8.

Le porte-étiquette 8 a ici une forme de plaque globalement rectangulaire.

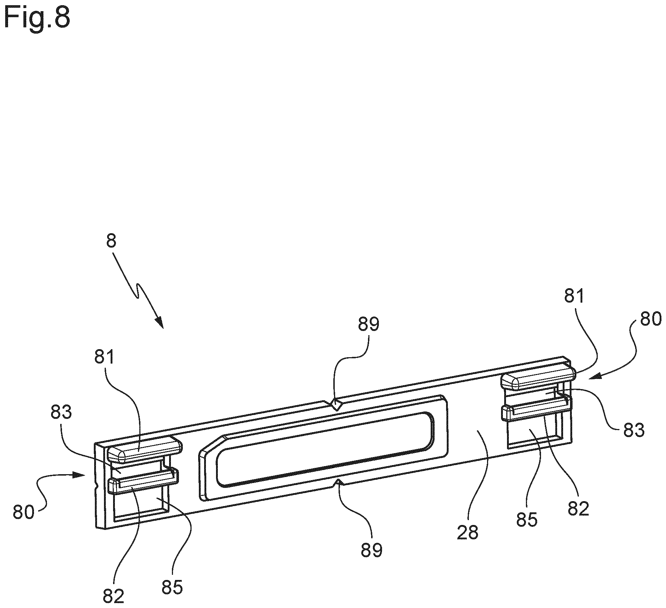

Comme visible sur les figures 7 et 8, le porte-étiquette 8 est pourvu d'éléments d'indexation 89, ici formés par des encoches, ménagés au centre de bords opposés de la face visible 29 et de la face de montage 28.

En outre, le porte-étiquette 8 est pourvu, sur sa face de montage 28, d'une pluralité de deuxièmes organes de guidage et d'encliquetage 80 configurés pour être assujettis mécaniquement dans certaines zones d'encliquetage 65 de la plaque support 22.

En d'autres termes, lorsque le porte-étiquette 8 est assujetti sur la plaque support 2, certaines zones d'encliquetage 65 ne sont pas assujetties avec les deuxièmes organes de guidage et d'encliquetage 80.

Dans l'exemple illustré, le porte-étiquette 8 est pourvu de deux deuxièmes organes de guidage et d'encliquetage 80 espacées l'un de l'autre et configurés pour coopérer avec des zones d'encliquetages 65 disposées sur une même première branche 17 de la plaque support 2.

Ainsi, lorsque le porte-étiquette 8 est assujetti mécaniquement sur la plaque support 2, les zones d'encliquetage 65 disposées sur les autres premières branches 16, 18, 19 de la plaque support 2 ne coopèrent pas avec les deuxièmes organes de guidage et d'encliquetage 80.

Au moins certaines des zones d'encliquetage 65 qui ne coopèrent pas avec les deuxièmes organes de guidage et d'encliquetage 80 coopèrent avec les premiers organes de guidage et d'encliquetage 75 de la plaque d'habillage 6 pour assujettir mécaniquement cette dernière à la plaque support 2.

La plaque d'habillage 6 et le porte-étiquette 8 sont alors assujettis mécaniquement sur la plaque support 2 par la coopération respectivement de premiers organes de guidage et d'encliquetage 75 avec certaines des zones d'encliquetage 65 de la plaque support 2 et de deuxièmes organes de guidage et d'encliquetage 80 avec certaines autres des zones d'encliquetage 65 de la plaque support 2.

En particulier ici, chaque deuxième organe de guidage et d'encliquetage 80 du porte-étiquette 8 est pourvu d'une patte de guidage 81 configurée pour être introduite dans l'évidement de guidage 67 et d'un ergot complémentaire 82 configuré pour être introduit dans l'ouverture 66 et pour s'encliqueter avec l'au moins un ergot d'encliquetage 68 d'une des zones d'encliquetage 65 de la plaque support 2.

La patte de guidage 81 s'étend en saillie de la face de montage 28 du porte-étiquette 8 sur une première longueur déterminée et présente une forme globalement tronconique se rétrécissant vers une extrémité libre de la patte de guidage 81.

En d'autres termes, la patte de guidage 81 comprend une face inférieure 86 et une face supérieure 87, opposée à la face inférieure 86, qui se rapprochent l'une de l'autre vers l'extrémité libre de la patte de guidage 81.

L'ergot complémentaire 82 s'étend en saillie sur une deuxième longueur déterminée, qui est ici inférieure à la première longueur prédéterminée, et en regard de la patte de guidage 81.

En outre, l'ergot complémentaire 82 comporte à une extrémité libre une deuxième dent 84 dirigée vers la patte de guidage 81.

Chaque deuxième organe de guidage et d'encliquetage 80 est pourvu en outre d'un orifice 83 ménagé à proximité immédiate de l'ergot complémentaire 82, ici entre la patte de guidage 81 et l'ergot complémentaire 82, et d'un renfoncement 85 ménagé à proximité immédiate de l'ergot complémentaire 82 et à l'opposé de la patte de guidage 81.

Le renfoncement 85 s'étend globalement sur toute la largeur de l'ergot complémentaire 82.

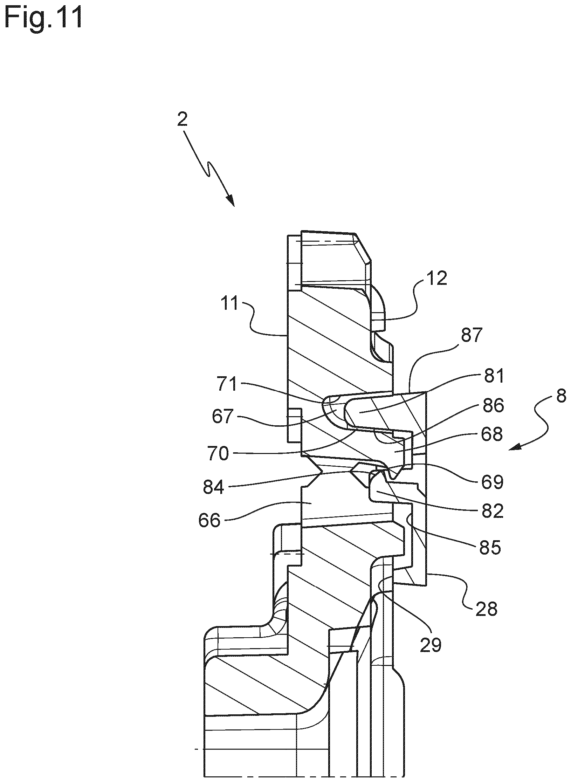

La figure 11 est une vue en coupe montrant le porte-étiquette 8 et la plaque support 2 dans une configuration assemblée où le porte-étiquette 8 est assujetti mécaniquement sur la plaque support 2 par la coopération d'un deuxième organe de guidage et d'encliquetage 80 avec une zone d'encliquetage 65.

La patte de guidage 81 de chaque deuxième organe de guidage et d'encliquetage 80 est introduite dans l'évidement de guidage 67 et l'ergot complémentaire 82 est introduit dans l'ouverture 66 en étant encliqueté avec l'ergot d'encliquetage 68.

L'ergot complémentaire 82 est mobile entre une première position stable, représentée sur la figure 11, et une deuxième position dans laquelle l'ergot complémentaire 82 est écarté de la patte de guidage 81 par rapport à sa première position stable, notamment lors de l'assemblage lorsque la première dent 69 de l'ergot d'encliquetage 68 coopère avec la deuxième dent 84 de l'ergot complémentaire 82.

La deuxième dent 84 présente une extrémité libre qui se trouve à une deuxième distance déterminée de la face inférieure 86 de la patte de guidage 81 suivant une direction générale d'extension du porte-étiquette 8 lorsque l'ergot complémentaire 82 est dans sa première position, et à une troisième distance déterminée, supérieure à la deuxième distance déterminée, de la face inférieure 86 de la patte de guidage 81 suivant la direction générale d'extension du porte-étiquette 8 lorsque l'ergot complémentaire est dans sa deuxième position.

La deuxième distance prédéterminée entre l'extrémité libre de la deuxième dent 84 et la face inférieure 86 de la patte de guidage 81 lorsque l'ergot complémentaire 82 est dans sa première position stable, est inférieure à la première distance prédéterminée entre l'extrémité libre de la première dent 69 et la paroi inférieure 70 de l'évidement de guidage 67 ; tandis que la troisième distance prédéterminée entre l'extrémité libre de la deuxième dent 84 et la face inférieure 86 de la patte de guidage 81 lorsque l'ergot complémentaire 82 est dans sa deuxième position stable, est égale voire légèrement supérieure, à la première distance prédéterminée entre l'extrémité libre de la première dent 69 et la paroi inférieure 70 de l'évidement de guidage 67.

En d'autres termes, la patte de guidage 81 et l'ergot complémentaire 82 du deuxième organe de guidage et d'encliquetage 80 peuvent être introduits dans ou retirés respectivement de l'évidement de guidage 67 et de l'ouverture 66 lorsque l'ergot complémentaire 82 est dans sa deuxième position, en vue respectivement d'assujettir mécaniquement ou de désassujettir mécaniquement le porte-étiquette 8 de la plaque support 2 ; tandis que lorsque la patte de guidage 81 est introduite dans l'évidement de guidage 67 et que l'ergot complémentaire 82 est introduit dans l'ouverture 66 et est dans sa première position stable, le porte-étiquette 8 est verrouillé sur la plaque support 2.

Dans l'exemple illustré, l'orifice 83 est configuré pour permettre le passage d'un outil pour faire passer l'ergot complémentaire 82 de sa première position à sa deuxième position et ainsi désassujettir mécaniquement le porte-étiquette 8 de la plaque support 2.

L'ergot complémentaire 82, une fois introduit dans l'ouverture 66, ne fait pas saillie depuis la face arrière 11 de la plaque support 2.

Des variantes non illustrées sont décrites ci-dessous.

L'appareillage électrique peut être d'un type différent. Par exemple, l'appareillage électrique peut être un interrupteur, un disjoncteur ou tout autre appareillage électrique pouvant être fixé sur un support quelconque.

La forme de la plaque support, de l'appareillage électrique et de la plaque d'habillage peut être globalement circulaire ou rectangulaire plutôt que carrée.

L'organe fonctionnel additionnel peut avoir une fonction différente ou supplémentaire que celle d'un porte-étiquette. Par exemple, l'organe fonctionnel additionnel peut être formé par un module de communication, notamment afin d'assurer une fonction de passerelle de communication, aussi appelée « communication gateway » en terminologie anglo-saxonne ou une fonction de commande à distance de l'appareillage électrique. Par exemple encore, l'organe fonctionnel peut est pourvu d'une antenne de télécommunication. L'organe fonctionnel additionnel peut aussi être formé par une source lumineuse.

L'organe fonctionnel additionnel peut avoir une forme différente, notamment en L ou en U.

Plusieurs organes fonctionnels additionnels peuvent être assujettis sur une même plaque support.

Les premiers et deuxièmes organes de guidage et d'encliquetage peuvent être configurés pour être assujettis mécaniquement dans des zones de guidages situées soit sur une première branche, soit sur deux premières branches parallèles opposées, soit sur deux premières branches perpendiculaires adjacentes, soit sur trois premières branches, soit sur toutes les premières branches de la plaque support.

En outre les premiers et deuxièmes organes de guidage et d'encliquetage peuvent être assujettis à seulement une des zones d'encliquetage de chaque première branche.

Chaque patte de montage peut être dépourvue de rainure d'encliquetage sur son premier côté respectif, qui présente alors une face globalement plane. Ainsi, dans sa deuxième position, la patte de montage qui est déformée élastiquement tend à solliciter l'ergot d'encliquetage suivant une deuxième direction opposée à la première direction, de sorte à maintenir la face globalement plane du premier côté de la patte de montage en appui contre l'ergot d'encliquetage. La patte de montage est alors maintenue dans l'ouverture, non pas par encliquetage, mais par friction, ou coincement, entre l'ergot d'encliquetage et la face globalement plane de la patte de montage.

Plus généralement, l'invention ne se limite pas aux exemples décrits et représentés.

## Revendications

1. Ensemble formé d'une plaque support (2) et d'au moins une plaque d'habillage (6) et d'au moins un organe fonctionnel (8) additionnel configurés pour être assujettis mécaniquement sur la plaque support (2), laquelle plaque support (2) présente une face arrière (11), une face avant (12) opposée à la face arrière, une pluralité de zones d'encliquetage (65) ménagées sur la face avant, et la plaque support (2) est configurée pour être fixée par sa face arrière sur un support quelconque et pour supporter sur sa face avant un appareillage électrique (4), l'au moins une plaque d'habillage présente une fenêtre (42) et une pluralité de premiers organes de guidage et d'encliquetage (75) configurés pour être assujettis mécaniquement dans certaines des zones d'encliquetage (65) respectives de la plaque support (2), et l'au moins un organe fonctionnel (8) additionnel est configuré pour être disposé en regard de la fenêtre (42) de l'au moins une plaque d'habillage (8) et présente une pluralité de deuxièmes organes de guidage et d'encliquetage (80) distincts des premiers organes de guidage et d'encliquetage (75) et configurés pour être assujettis mécaniquement dans certaines autres des zones d'encliquetage (65) respectives de la plaque support (2).

2. Ensemble selon la revendication 1, **caractérisé en ce que** chaque zone d'encliquetage (65) de la plaque support (2) est pourvue d'au moins une ouverture (66), d'au moins un évidement de guidage (67) et d'au moins un ergot d'encliquetage (68) disposé entre l'ouverture (66) et l'évidement de guidage (67).

3. Ensemble selon la revendication 2, **caractérisé en ce que** chaque premier organe de guidage et d'encliquetage (75) de l'au moins une plaque d'habillage (6) est configuré pour être introduit dans l'au moins une ouverture (66) et pour s'encliqueter avec l'au moins un ergot d'encliquetage (68) d'une des zones d'encliquetage (65) de la plaque support (2).

4. Ensemble selon la revendication 3, **caractérisé en ce qu'**au moins un premier organe de guidage et d'encliquetage (75) est pourvu d'une patte de montage (75) s'étendant en saillie et, sur un premier côté (76) de la patte de montage, de rainures d'encliquetage (77) configurées pour coopérer avec l'ergot d'encliquetage (68) d'une des zones d'encliquetage (65) de la plaque support (2) et, sur un deuxième côté (78) de la patte de montage (75) opposé au premier côté (76), d'au moins une nervure de renfort (79).

5. Ensemble selon la revendication 4, **caractérisé en ce que**, dans une configuration assemblée, les rainures d'encliquetage (77) de la patte de montage (75) coopèrent avec l'ergot d'encliquetage (68), avec la patte de montage (75) qui est déformée élastiquement et tend à solliciter l'ergot d'encliquetage (68).

6. Ensemble selon l'une quelconque des revendications 2 à 5, **caractérisé en ce que** chaque deuxième organe de guidage et d'encliquetage (80) de l'au moins un organe fonctionnel additionnel (8) est pourvu d'une patte de guidage (81) configurée pour être introduite dans l'évidement de guidage (67) et d'un ergot complémentaire (82) configuré pour être introduit dans l'au moins une ouverture (66) et pour s'encliqueter avec l'au moins un ergot d'encliquetage (68).

7. Ensemble selon la revendication 6, **caractérisé en ce que** la patte de guidage (81) s'étend en saillie sur une première longueur déterminée et présente une forme globalement tronconique se rétrécissant vers une extrémité libre de la patte de guidage.

8. Ensemble selon l'une des revendications 6 et 7, **caractérisé en ce que** l'ergot complémentaire (82) s'étend en saillie sur une deuxième longueur déterminée et en regard de la patte de guidage (81) et comporte à une extrémité libre une dent (84) dirigée vers la patte de guidage (81).

9. Ensemble selon l'une quelconque des revendications 6 à 8, caractérisé en que chaque deuxième organe de guidage et d'encliquetage (80) est pourvu d'un orifice (83) ménagé à proximité immédiate de l'ergot complémentaire (82) et configuré pour permettre le passage d'un outil pour désassujettir mécaniquement l'organe fonctionnel additionnel (8) de la plaque support (2).

10. Ensemble selon l'une quelconque des revendications 6 à 9, caractérisé en que chaque deuxième organe de guidage et d'encliquetage (80) est pourvu en outre d'un renfoncement (85) ménagé à proximité immédiate de l'ergot complémentaire (82) et à l'opposé de la patte de guidage (81).

11. Ensemble selon l'une quelconque des revendications 6 à 10, caractérisé en que la patte de guidage (81) s'étend en saillie sur une première longueur déterminée et l'ergot complémentaire (82) s'étend en saillie sur une deuxième longueur déterminée inférieure à la première longueur déterminée.

12. Ensemble selon l'une quelconque des revendications 1 à 11, **caractérisé en ce que** l'au moins un organe fonctionnel additionnel (8) est formé par au moins l'un parmi un porte-étiquette, un module de communication et une source lumineuse.

13. Ensemble selon l'une quelconque des revendications 1 à 12, **caractérisé en ce que** l'au moins une plaque d'habillage (6) est assujettie mécaniquement sur la plaque support (2) par la coopération de deux ou plus de premiers organes de guidage et d'encliquetage (75) avec certaines des zones d'encliquetage (65), et l'au moins un organe fonctionnel (8) additionnel est assujetti mécaniquement sur la plaque support (2) par la coopération de deux deuxièmes organes de guidage et d'encliquetage (80) avec certaines autres des zones d'encliquetage (65).

14. Ensemble selon la revendication 13, **caractérisé en ce que** la plaque support (2) a la forme d'un cadre présentant plusieurs branches (16, 17, 18, 19) pourvues chacune d'une ou plusieurs zones d'encliquetage (65), et l'au moins un organe fonctionnel (8) additionnel est configuré pour être assujetti mécaniquement sur la plaque support (2) par la coopération de deux deuxièmes organes de guidage et d'encliquetage (80) avec certaines autres des zones d'encliquetage (65) disposées soit sur une même branche du cadre, soit sur des branches distinctes du cadre.

15. Ensemble selon l'une quelconque des revendications 1 à 14, **caractérisé en ce qu'**il comporte au moins un appareillage électrique (4) supporté par la plaque support (2).
